# EUROPEAN PATENT APPLICATION

(11) **EP 0 729 711 A1**
(43) Date of publication of application: **04.09.1996**
(21) Application number: 95928505.7
(22) Date of filing: 16.08.1995
(51) Int. Cl.: A23N 15/02

(54) **DEVICE FOR CUTTING THE CALYX AND THE STEM OF HORTOFRUIT CULTURE PRODUCTS**

(30) Priority: 16.08.1994 ES 9402212 U
(71) Applicant: FRUTAMAR, S.L., 21810 Palos de la Frontera (ES)
(72) Inventor: MENCHON MARIN, Antonio, 21810 Palos de la Frontera (Huelva) (ES)
(74) Representative: Del Campo Castel, Domingo
(86) International application number: ES9500100
(87) International publication number: WO9604806

(57) **Abstract**

Device for cutting the calyx and the stem of hortofruit culture products, comprising a device (1) mounted on a conveyor belt (2), on which the fruits are conveyed, incorporated in the sides (3) of the conveyor belt, configured by a tubular portion (4), related with another extreme coaxial portion (5), through the use of a bearing (6), the external portion (5) being associated through springs (7) with another upper portion (8), capable of effecting an axial displacement and through which is moved the tubular rotary part (4) which is provided at its perimetral extremity with a toothing (9), and an internal inclined blade (10), the toothing (9) being intended to remove the calyx of the fruit, while the blades (10) remove the stem.

## Description

The present invention relates to a device for cutting the calyx and the stem of hortofruit culture products.

Nowadays, no machine being capable of carrying out these two operations is known.

Usually, these two operations are manually performed, and this with very rudimentary tools, especially for removing the stem of the fruit, since if this stem is not removed when the fruit is - going to be frozen or preserved, then the stem becomes stiff and woody, which is detrimental when used in its numerous human consumption versions.

The fact of performing manually these operations, and with - slightly appropiate tools, makes the fruit to become spoiled, with a part of the stem remaining inside it, since this sort of operation performs a blind piercing.

In order to avoid these drawbacks, the device of the invention has been devised, which, due to its own constitution and functional character, is simple and safe to be used for cutting both the calyx and the stem of hortofruit culture products.

According to the invention, the device is mounted on a fruit conveyor belt.

The device comprises a tubular rotary part through a belt conveyor, said part rotating by means of a bearing which is located within an external part.

This fixed external part is associated through springs with another displaceable tubular part which is installed on the end portion of the tubular rotary part, and, furthermore, this displaceable part has an end recess through which the extremity of the rotary part emerges, which is fitted with a perimetral toothing constituting a means for cutting the stem and the leaves of the fruit, while an inner blade cuts or removes the stem.

A portion of the product and the remainder cuttings falls through the interior of the rotary part.

The whole is picked up in a sort of bucket or spout incorporated in the conveyor belt, being later disposed of in appropiate containers.

In order to understand more easily not only the constitution but also the own utilization of the device of the invention, a practical example of embodiment follows, this embodiment being only illustrative, and in any case non-limitative of same, all this such as is illustrated by the appending drawings, in which:
- Figure 1 shows a perspective view of a fruit conveyor belt, on which the device of the invention is mounted;
- Figure 2 shows a sectional view of Figure 1; and

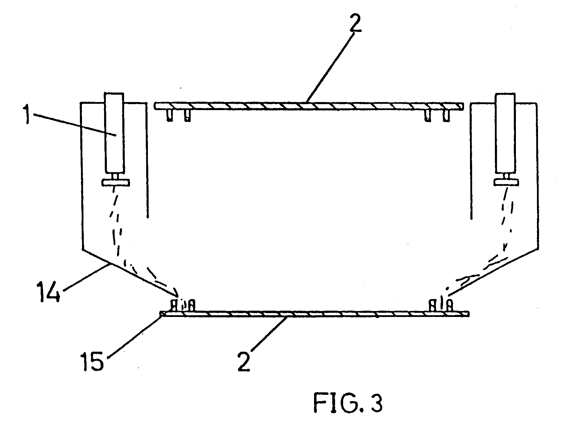

- Figure 3 shows an arrangement of the conveyor belt of the invention, as well as the picking up of the remains through - channels incorporated in the belt itself.

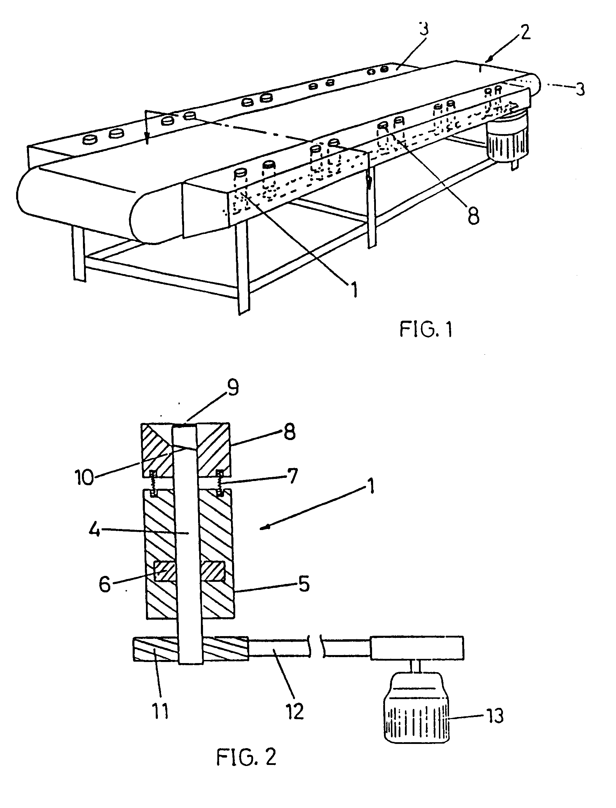

Referring now to the drawings, Fig. 1 shows a perspective view of the device (1) of the invention, mounted on a conveyor bel (2) on which the fruits are conveyed.

The device (1) is incorporated in the fixed sides (3) of the conveyor belt

The device comprises a tubular portion (4), related with another extreme coaxial portion (5), by means of a bearing (6).

The external portion (5) is associated by means of springs - (7) with another upper portion (8), capable of effecting an - axial displacement and thorugh which the tubular rotary part (4) runs.

The tubular rotary part (4) is provided, at its perimetral extremity, with a toothing (9) and an internal inclined blade (10)

The toothing (9) is intended to remove the calyx of the fruit, and the blades (10) are used for removing the stem (not shown) of the fruit.

The tubular rotary part (4) has a pulley (11) around which a driving belt (12) runs, driving a reducing motor (13).

The cut tail, leaves and stem of the fruit pass to a sort of tray (14), which acts as a casing, which conveys the remains to a spout (15) incorporated in the conveyor belt, and at the end of the path, the remains are poured in an appropiate container.

The devices (1) are arranged in line, so that all them will receive a same driving from the motor.

Once the nature of the invention has been adequately described, as well as the manner in which it is to be performed in practice, it must be understood that the above mentioned arrangements, illustrated in the appended drawings, are capable of being modified in detail provided that it does not imply any alteration to their fundamental principle.

## Claims

1. A device for cutting the calyx and the stem of hortofruit culture products, characterized in that it is constituted by a structure formed by a conveyor belt on which fruits are conveyed, said device comprising a tubular rotary part moved by a driving belt driven by a reducing motor, said part rotating on a bearing located inside a fixed coaxial part fitted with end springs associated with another displaceable and confronted tubular part mounted on the tubular rotary part, which is provided with an extreme perimetral toothing by means of which the calyx of a strawberry is cut while an inclined blade located inside the tubular - rotary part removes its stem; the scraps fall within the rotary part and are picked up and transferred to channels incorporated in the inner surface of the belt, the scraps being disposed of in appropiated containers.

2. A device according to claim 1, characterized in that the sides of the conveying machine contain a series of lined up devices which are, all them, driven by a same driving system and a same motor.
